Europäisches Patentamt

European Patent Office

Office européen des brevets

(19)

(11) Publication number: **0 302 618**

**A1**

## EUROPEAN PATENT APPLICATION

(21) Application number: 88306577.3

(51) Int. Cl.⁴: **F16L 13/00 , F16B 4/00**

(22) Date of filing: 19.07.88

(30) Priority: 23.07.87 GB 8717477
22.09.87 GB 8722299
08.04.88 GB 8808216

(43) Date of publication of application:
08.02.89 Bulletin 89/06

(84) Designated Contracting States:
**DE ES FR GB IT**

(71) Applicant: **BTR INDUSTRIES LIMITED**
**Silvertown House Vincent Square**
**London, SW1P 2PL(GB)**

(72) Inventor: **Brown, Leslie**
**139 Hollywood Lane**
**Hollywood Birmingham B47 5QJ(GB)**

(74) Representative: **Treves, Barry William et al**
**Dunlop Limited Group Patent Department**
**P.O.Box 504**
**Erdington Birmingham B24 9QH(GB)**

(54) **Connecting device.**

(57) Connecting device for detachably joining such articles as pipes or component parts of a heat exchanger comprising a coupling member of shape memory effect (SME) material and an intermediate compressible member such as a gasket or split ring. A typical SME material is the alloy TINEL marketed by Raychem Limited. The use of this material enables the articles to be connected, separated and reconnected many times with repeatable stresses etc and without the need for machining and forming operations which are often complicated and expensive.

**Fig. 3.**

## CONNECTING DEVICE

This invention relates to a connecting device for joining together two or more articles such as pipes or components of a heat exchanger.

Pipes or other articles are conventionally joined together by various mechanical means. For example they may be formed with flanges and held together by nuts and bolts or screws. These mechanical means require the article to be machined and/or shaped, which can be costly, and the utilisation of space by the flanges etc which could be taken up by other devices etc.

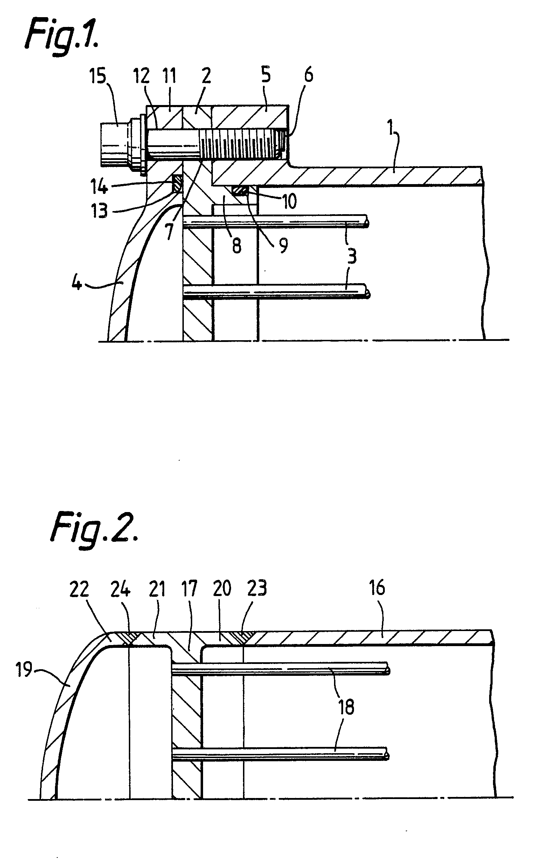

One example of a device comprising several articles joined together by means of flanges and bolts is a heat exchanger as illustrated in Figure 1 of the accompanying drawings. This Figure shows a partial cross-section of a heat exchanger comprising an outer shell 1, a tube plate 2 supporting a tube matrix 3 (only two tubes shown) and an end cover 4. In operation one fluid flows from within the end cover 4 through the tube matrix 3 and the other fluid flows around the outside of the tube matrix 3 inside the shell 1.

As can be seen in the drawing the shell 1 in the form of an open-ended cylinder is formed with a flange 5 extending around the edge of its open end, the flange extending radially outwards from the shell. A plurality of internally threaded holes 6 is formed in the flange 5, spaced apart symmetrically around the shell, only one hole being illustrated.

The tube plate 2 is also provided with a plurality of holes 7 equal in number, spacing and pitch centre diameter to the threaded holes 6 in the flange 5 of the shell, and with an axially-extending cylindrical flange 8. The outer surface of the cylindrical flange 8 is a sliding fit inside the cylindrical shell 1, and is provided with a circumferentially extending groove 9 containing an O-ring seal 10 which engages the interior surface of the shell 1.

The cover 4 is generally dome-shaped but provided at its outer periphery with a radially-outwardly extending rim flange 11 provided with a plurality of holes 12 equal in number, spacing and pitch centre diameter to the threaded holes 6 in the flange 5 of the shell 1. The surface of the rim flange 11 abutting the tube plate 2 is provided with a circumferentially-extending groove 13 containing an O-ring seal 14 thus providing a fluid-tight seal between the end cover 4 and the tube plate 2.

The shell 1, tube plate 2 and end cover 4 are joined together by means of bolts 15 (only one shown) each passing through one of the holes 12 in the cover 4 and one of the holes in the end plate 2, and engaging with the thread on the interior of one of the holes 6 in the flange 5 of the shell 1.

As will be appreciated the formation of the flange 5 of the shell 21 and the rim flange 11 of the cover 4 and the holes therein requires relatively expensive shaping or casting processes and machining operations. The flanges take up space externally of the shell 1 and space must also be left for an operator to insert a tool e.g. a spanner, for tightening the bolts 15. Furthermore, when there is a need to remove the tube matrix for inspection and repair care must be taken not to damage the various flanges and holes and to ensure that the various component articles i.e. the shell 1, end plate 2 and cover 4 are joined with the same force on each occasion.

In other conventionally-used methods of joining the component articles are screw-threaded e.g. one pipe may be formed with an externally screw-threaded spigot which engages with an internally screw-threaded socket on another pipe, but this requires relatively expensive shaping and machining operations, and the rotation of one of the pipes relative to the other. A further disadvantage is that it may not be easy to separate the two pipes and then re-join them with the same force.

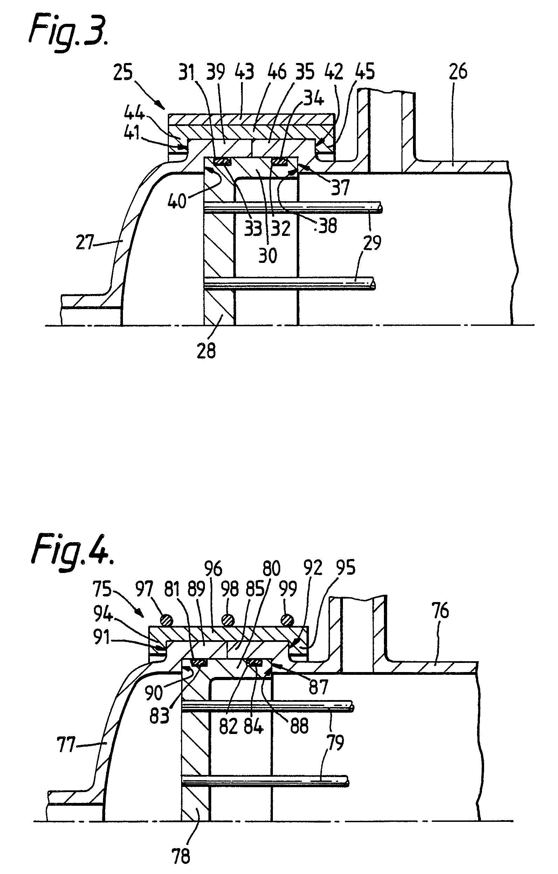

Sometimes component articles are joined together by welding or brazing, or by the use of an adhesive. An example of a prior art construction using welding is illustrated in Figure 2 which is a partial cross-section through a heat exchanger comprising a cylindrical shell 16, a tube plate 17 supporting a tube matrix 18 (only two tubes being shown) and a domed end cover 19. The tube plate 17 is formed in this construction with two flanges 20 and 21, one flange 20 extending in one axial direction towards the shell 16 and the other flange 21 extending in the opposite direction towards the rim 22 of the end cover 19. The rim 22, flanges 20 and 21 and shell 26 each have equal external diameters. As shown the end of the shell 16 is joined to one flange 20 of the tube plate 17 by means of a continuous weld 23, and the rim 22 of the cover 19 is joined to the other flange 21 of the tube plate by means of another continuous weld 24.

When a need to inspect and possibly repair or replace a tube from the matrix 18 arises it is not easy to separate the cover from the tube plate, or the tube plate from the shell and it is difficult to remake the welds since the mating surfaces may well have become damaged or deformed.

It is an object of the present invention to provide a connecting device the use of which largely overcomes or eliminates the above-mentioned disadvantages.

In accordance with the invention, a connecting device for detachably joining two or more articles together comprises a coupling member of shape memory effect material (as hereinafter defined) and a compressible member formed with a closeable gap and capable of being positioned between the coupling member and at least one of the articles.

The articles to be joined together may, for example be two pipes in end-to end abutting or socket and spigot relationship or components of a larger device e.g. the shell, tube plate and end cover of a heat exchanger.

The connecting device may comprise a plurality of coupling members, each of shape memory effect material (as hereinafter defined), the compressible member capable of being positioned between at least one of the coupling members and at least one of the articles.

The or each coupling member may be in the form of a ring and may be of circular cross-section or of any other suitable shape e.g. cylindrical.

The compressible member may for example comprise a split ring i.e. a ring with a small closeable gap so that its circumference may be reduced during the joining operation. The ring may comprise two or more separate sections separated from one another by a plurality of closeable gaps. The compressible member may comprise rubber, plastic or metallic material e.g. soft metal alloy. The compressible member may comprise guide means e.g. channel, for locating at least part of one of the articles.

By "shape memory effect material" is meant a material which undergoes a thermoelastic martensitic transformation, such a transformation being characterised by martensite plates forming and growing continuously as the temperature is lowered through the transformation, and similarly shrinking and vanishing as the temperature is raised through the transformation.

A range of alloys based on the Cu. Zn. Al. and Ni.Ti. systems have been identified, which, if plastically deformed in the martensitic state are able to exhibit the shape memory effect.

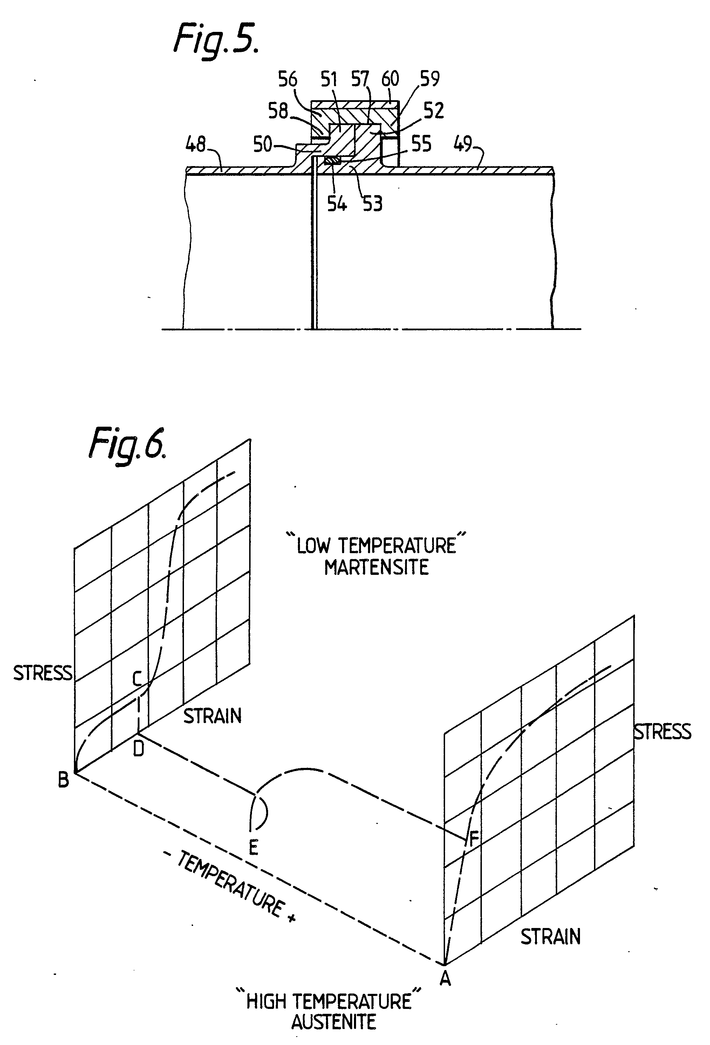

The characteristics of a shape memory effect material will be better understood if a ring of an alloy is imagined, and this ring is required to be positioned securely on a shaft. The ring is first machined to the desired memory shape in the "high temperature", austenite phase. This is typically at ambient temperature, e.g. $0\degree$C-$30\degree$C. When machined the ring has an internal diameter slightly less than the external diameter of the shaft (Point A in Figure 6). The ring is then cooled to its "low temperature" martensite phase e.g. by spraying it with liquid nitrogen (Point B in Figure 6). When in the low temperature phase a controlled stress is applied which deforms the ring to an intermediate diameter (Point C in Figure 6). In other words the ring is expanded so that its internal diameter is increased to a size slightly larger than the external diameter of the shaft. When the controlled stress is removed the ring retains approximately 8% strain and it will retain this deformed shape as long as it is held below the transformation temperature (Point D in Figure 6). When the ring is allowed to warm through the phase transformation temperature zone the alloy structure returns to austenite and the inside diameter returns to its previously machined dimension. When it is installed on a shaft before warming it will contact the shaft as it shrinks (Point E in Figure 6). This produces a stress in both the ring and shaft which will increase until equilibrium of force is reached between the shaft and the ring. The ring is then permanently installed on the shaft and cannot (at warm temperatures) be easily removed (Point F in Figure 6).

With many of these shape memory effect materials it is possible to remove the ring by cooling it again to the "low temperature" martensite phase when it will expand to its deformed shape (Point D in Figure 6). However this reversibility is not always possible in view of the characteristics of some shape memory effect materials and then the ring must be removed by other methods e.g. by cutting.

In those instances where the ring can be removed by cooling the process is repeatable as the various stresses and strains involved are reproducible.

Three embodiments of the invention will now be described by way of example only. Reference will be made to the accompanying drawings of which:-

Figure 1 is a partial longitudinal cross-section through a conventional heat exchanger having an end cover and the tube plate bolted to a shell;

Figure 2 is a partial longitudinal cross-section through a conventional heat exchanger having an end cover, tube plate and shell welded together;

Figure 3 is a partial longitudinal cross-section through a connecting device in accordance with the first embodiment of the invention as used for joining the component articles of a heat exchanger together;

Figure 4 is a partial longitudinal cross-section through a connecting device in accordance with the second embodiment of the invention as used for joining the component articles of a heat exchanger together;

Figure 5 is a partial longitudinal cross-section through a connecting device in accordance with the third embodiment of the invention as used for joining two pipes together; and

Figure 6 shows the stress/strain characteristics of a shape memory effect material in "low temperature" and "high temperature" phases.

The first embodiment of the invention, illustrated in Figure 3, comprises a connecting device 25 for detachably joining together the component articles of a heat exchanger. As shown the connecting device 25 comprises a compressible ring 46 and an outer coupling ring 43, and the heat exchanger comprises a shell 26, an end cover 27 and a tube plate 28 supporting a tube matrix 29 (only two tubes shown). The tube plate 28 is provided with a cylindrical edge flange 30 and two circumferential grooves 31 and 32 are formed in the outer surface of the flange. The grooves 31 and 32 retain 'O' ring seals 33 and 34 respectively.

The end of the shell 26 is formed with an end socket 35 in which the edge flange 30 is a sliding fit, the extremity 37 of the flange abutting an internal shoulder 38 on the shell. One of the 'O' ring seals 34 engages the interior surface of the socket 35 to form a fluid tight seal between the tube plate 28 and the shell 26.

The edge of the end cover 27 is formed with a rim socket 39 which substantially matches the end socket 35 on the shell 26. The two sockets abut one another and the rim socket slidingly receives the tube plate 28 and part of its edge flange 30. The edge of the tube plate abuts an internal shoulder 40 of the rim socket 39 and the other O ring 33 contacts the internal surface of the rim socket 39 to form a fluid-tight seal between the end cover 27 amd the tube plate 28.

As can be seen in Figure 3 the rim socket 39 and the end socket 35 abut one another and are symmetrical in shape and dimensions about the abutment line. Each respective socket is formed with an external shoulder indicated at reference numeral 41 on the rim socket 39 and reference numeral 42 on the end socket 35.

The two sockets 39 and 35 and covered by the compressible ring 46 and the outer ring 43 of the connecting device. The compressible ring 46 is provided with guide means comprising two side flanges 44 and 45 which define a shallow channel on its interior. The side flanges 44 and 45 each abut one of the shoulder sockets 41 and 42 and the shallow channel receives and locates the rim socket 39 and the end socket 35. The ring 46 is formed in sections, in this embodiment two semi-circular halves, and has two diametrically-opposed gaps so that its overall circumference may be altered e.g. compressed.

Outwardly of the ring 46 is the cylindrically shaped ring 43 of shape memory effect material which is applied to the outer periphery of the ring 46 in an analogous manner to the positioning of a ring on a shaft described above with reference to Figure 6. Briefly, the outer, cylindrically shaped ring 43 is cooled, deformed outwards at the low temperature, and positioned over the two semi-circular halves of the ring 46 in position over the two sockets 39 and 35. The cylindrical ring is allowed to warm up to ambient temperatures so that it presses against the two halves of the ring 46 which are compressed together, tending to close the gaps, and the whole device of cylindrical ring 43 and two halves of the ring 46 connects the shell 26, end cover 27 and tube plate 28 together in fluid-tight sealing engagement.

The method of removing the end cover 27 depends on the characteristics exhibited by the shape memory effect material of the ring 43.

Some shape memory effect materials, mainly those which are copper based, are able to reverse the transformation by cooling the material. In this case by spraying the ring 43 with liquid nitrogen and applying a relatively small expansion stress, the ring 43, the two halves of the ring 46, and the end cover may be removed. When the end cover 27 is replaced, the same ring 43 can be used in the connecting device.

Other materials are not so reversible in their structure and therefore the ring 43 must be cut to remove the end cover 27. When the end cover is replaced a fresh ring 43 of the same material and dimensions as the original is used.

When the end cover 27 is removed the tube plate 28 and tube matrix 29 may be inspected and any necessary repairs or replacements carried out.

The second embodiment of the invention, illustrated in Figure 4 comprises a connecting device in accordance with the invention, as used for joining the component articles of a heat exchanger together.

As shown in Figure 4, the embodiment comprises a connecting device 75 comprising a compressible ring 96 and a plurality of outer coupling rings 97,98 and 99, for detachably joining together the component articles of a heat exchanger which comprises a shell 76, an end cover 77 and a tube plate 78 supporting a tube matrix 79 (only two tubes shown). The tube plate 78 is provided with a cylindrical edge flange 80 and two circumferential grooves 81 and 82 are formed in the outer surface of the flange. The grooves 81 and 82 retain O ring seals 83 and 84 respectively.

The end of the shell 76 is formed with an end socket 85 in which the edge flange 80 is a sliding fit, the extremity 87 of the flange abutting an internal shoulder 88 on the shell. One of the O ring seals 84 engages the interior surface of the socket 85 to form a fluid-tight seal between the tube plate 78 and the shell 76.

The edge of the end cover 77 is formed with a rim socket 89 which substantially matches the end socket 85 on the shell 76. The two sockets abut one another and the rim socket slidingly receives the tube plate 78 and part of its edge flange 80.

The edge of the tube plate abuts an internal shoulder 90 of the rim socket 89 and the other O ring 83 contacts the internal surface of the rim socket 89 to form a fluid-tight seal between the end cover 77 and the tube plate 78.

As can be seen in Figure 4, the rim socket 89 and the end socket 85 abut one another and are symmetrical in shape and dimensions about the abutment line. Each respective socket is formed with an external shoulder indicated at reference numeral 91 on the rim socket 89 and reference numeral 92 on the end socket 85.

The two sockets 89 and 85 are covered by the compressible ring 96 of the connecting device 75, the ring being formed with two side flanges 94 and 95 to define a shallow channel on its interior. The side flanges 94 and 95 each abut one of the socket shoulders 91 and 92 and the shallow channel receives and locates the rim socket 89 and the end socket 85. The ring 96 is formed in sections, in this embodiment two semi-circular halves, and has two diametrically opposed gaps so that its overall circumference may be altered e.g. compressed.

Outwardly of the ring 96 are three equally spaced-apart rings 97,98 and 99, each of shape memory effect material and of circular cross-section. The three rings may each be located in shallow locating grooves formed on the outer surface of the ring 96. The three rings 97, 98 and 99 may have other cross-sectional shapes, e.g. semicircular or square. To apply these rings 97, 98 and 99 to the two semi-circular halves of the ring 96, each ring is cooled, deformed outwards at a low temperature and positioned over the two semi-circular halves in the respective positions shown in the drawing. The three rings are allowed to warm up to ambient temperatures so that each presses againt the two halves of the ring 96 which are thus compressed together, tending to close the gaps, and the whole device of cylindrical rings 97,98 and 99 and the two halves of the ring 96 connects the shell 76, end cover 77 and tube plate 78, together in fluid-tight sealing engagement. As with the first embodiment, depending on the characteristics of the material of the rings 97, 98 and 99, the end cover 77 may be removed either by spraying the rings 97, 98 and 99 with liquid nitrogen and applying a relatively small expansion stress or by cutting the rings 97, 98 and 99 so that the connecting device is separated from the remaining components of the heat exchanger. Thus the tube plate 78 and the tube matrix 79 may be inspected and any necessary repairs or replacements carried out.

The third embodiment of the invention, illustrated in Figure 5 comprises a connecting device for a socket and spigot junction between two pipes 48 and 49. The socket 50 on the socket-carying pipe is formed with a radially outwardly projecting flange 51 which abuts another radially outwardly projecting flange 52 formed a short distance away from the end of the spigot-carrying pipe 49. The outer surface of the spigot 53 is provided with a circumferential groove 54 retaining an 'O' ring 55 which engages the interior surface of the socket to form a fluid-tight seal.

The connecting device in this third embodiment comprises a cylinder 60 and a split ring 56 i.e. a ring with a small axially-extending gap, formed on its interior surface with a shallow channel 57 between two radially-inwardly extending edge flanges 58 and 59. The channel receives and locates the two flanges 51 and 52 formed on the two pipes 48 and 49 respectively. The cylinder 60 is positioned outwards of the split ring and is of shape memory effect material which can be caused to compress the compressible split ring 56 by closing the gap and hence connect the two pipes 48 and 49 in a manner similar to that described in connection with the first embodiment shown in Figure 3.

The main advantage of the present invention is that the connecting device can easily be removed, the separate articles detached from one another and then reconnected time and time again as required without damage and with controllable stresses. Furthermore the shape of the connecting device is relatively simple and does not take up excessive space nor need any complicated machining or shaping. This can be seen by comparing the constructions illustrated in Figure 3 (the first embodiment) and in Figure 1 (a conventional arrangement).

## Claims

1. A connecting device for detachably joining two or more articles together characterised by comprising a coupling member (43 or 60) of shape memory effect material (as herein defined) and a compressible member (46 or 56) formed with a closeable gap and capable of being positioned between the coupling member (43 or 60) and at least one of the articles.

2. A connecting device according to Claim 1 characterised by comprising a plurality of coupling members (97, 98 and 99) each of shape memory effect material (as herein defined), the compressible member (96) being capable of being positioned between at least one of the coupling members (97, 98 or 99) and at least one of the articles.

3. A connecting device according to Claim 1 or Claim 2 characterised in that the or each coupling member (43 or 60) is in the form of a ring of cylindrical shape.

4. A connecting device according to Claim 1 or Claim 2 characterised in that the or each coupling member (97, 98 or 99) is in the form of a ring of circular cross-section.

5. A connecting device according to any one of the preceding claims characterised in that the compressible member (56) comprises a split ring.

6. A connecting device according to any one of Claims 1-4 characterised in that the compressible member (46 or 96) comprises a plurality of separate sections, separated from one another by a plurality of closeable gaps.

7. A connecting device according to any one of the preceding claims characterised in that the compressible member (46, 56 or 96) comprises a rubber, plastic or metallic material.

8. A connecting device according to any one of the preceding claims characterised in that the compressible member comprises guide means (57) for locating at least part of one of the articles.

9. An assembly comprising a connecting device according to any one of the preceding claims and at least two articles joined together by means of the connecting device.

10. An assembly comprising a connecting device according to any one of claims 1-8 and at least two pipes in end-to-end abutting or socket and spigot relationship.

11. An assembly comprising a connecting device according to any one of claims 1-8 and the components of a heat exchanger.

*Fig.1.*

*Fig.2.*

Fig.3.

Fig.4.

Fig.5.

Fig.6.

"LOW TEMPERATURE"
MARTENSITE

STRESS

STRAIN

STRESS

- TEMPERATURE +

STRAIN

"HIGH TEMPERATURE"
AUSTENITE

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | FR-A-2 443 755 (RAYCHEM LTD) <br> * Page 12, lines 10-31; figures 1-3 * | 1-11 | F 16 L 13/00 <br> F 16 B 4/00 |
| X | GB-A-2 039 654 (RAYCHEM CORP.) <br> * Abstract; figure 1 * | 1,3-11 | |
| A | US-A-2 766 903 (F. BONI) <br> * Column 4, line 62 - column 5, line 47; figures 1,2,3-5 * | 6-8,11 | |
| A | NAVAL ENGINEERS JOURNAL, vol. 94, no. 6, December 1982, pages 63-71, Washington, US; D.J. LIBERATORE et al.: "The introduction of heat recoverable couplings to ship repair and maintenance" <br> * Page 64, right-hand column, line 19 - page 65, left-hand column, last line; figures 3,5 * | 1 | |

TECHNICAL FIELDS SEARCHED (Int. Cl.4)

F 16 L
F 16 B
F 28 F

The present search report has been drawn up for all claims

| Place of search | Date of completion of the search | Examiner |
|---|---|---|
| THE HAGUE | 15-11-1988 | ARESO Y SALINAS J. |

EPO FORM 1503 03.82 (P0401)